Europäisches Patentamt

European Patent Office

Office européen des brevets

(11) Publication number: **0 227 035**

**A2**

# (12) EUROPEAN PATENT APPLICATION

(21) Application number: 86117600.6

(22) Date of filing: 17.12.86

(51) Int. Cl.⁴: **F04B 43/06**

(30) Priority: 19.12.85 JP 194308/85

(43) Date of publication of application:
01.07.87 Bulletin 87/27

(84) Designated Contracting States:
BE CH DE FR IT LI NL SE

(71) Applicant: **Hoya, Takeshi**
**6-2666-1, Sumiyoshi-cho**
**Hoya-shi Tokyo(JP)**

(72) Inventor: **Hoya, Takeshi**
**6-2666-1, Sumiyoshi-cho**
**Hoya-shi Tokyo(JP)**

(74) Representative: **Luyken, Richard, Dipl.-Phys.**
**Tal 27**
**D-8000 München 2(DE)**

(54) **Pressure-feeding apparatus.**

(57) A pressure-feeding apparatus has a construction wherein a flexible membrane member (1) made of rubber or the like is disposed while its base end is fixed, inside a cylindrical housing (8) in such a manner as to swell at its tip portion and to define a pressure-feeding chamber (2) for a liquid to be pressure-fed at the front portion and a pressure chamber (3) for an operation liquid such as oil at the rear portion. Another hydraulic cylinder (16) is directly coupled to the wall of the pressure chamber (3), an output chamber (5) of said another hydraulic cylinder is directly coupled through the feed/discharge ports (7') and the piston (23) of said another hydraulic cylinder (16) is interconnected to a piston (28) of still another hydraulic cylinder (26) disposed at the rear of said another hydraulic cylinder (16) through a rod (24).

FIG. 1

## PRESSURE-FEEDING APPARATUS

B Field of the Invention

The technique disclosed in this device relates to the technical field relating to the construction of an apparatus for pressure-feeding a liquid such as a slurry of an industrial waste liquor under a high pressure state to a processing apparatus of a next stage such as a filter press.

C Description of the Prior Art

Liquid pressure-feeding apparatuses have been used in various fields as is well known, and a plunger type or a disphragm type apparatuses have been employed in accordance with intended applications. Among them, the disphragm type pressure-feeding apparatus has gained a wide application because it can provide a high output. In the conventional diaphragm type pumps, the stroke of its flexible membrane member is small so that the output area cannot be made great at the final stage of its operation and for this reason, there is a limit to its output.

The Applicant of the present device proposed previously various prior inventions and devices such as Japanese Patent Application No. 196757/1984. As shown in Fig. 2 of the accompanying drawings, the Applicant proposed previously a pressure-feeding apparatus of the type wherein a flexible membrane member 1 made of rubber expands ahead remarkably. The flexible membrane member 1 defines a pressure-feeding chamber 2 at the front and a pressure chamber 3 at the rear, and after the pressure of a liquid 4 to be pressure-fed such as a slurry is elevated by an operation liquid 3 such as an oil, it is pressure-fed to a filter of the next stage.

In the pressure-feeding apparatus 5 of the prior art described above, however, the operation liquid 5 such as oil must be charged and discharged by a high pressure pump into and from the pressure chamber 3 through its feed/discharge port 7 in the middle of the operation cycle. Accordingly, a piping arrangement becomes elongated and the pressure loss becomes great in accordance with the length of the piping arrangement. In addition, leak of the operation liquid occurs unavoidably with the passage of time in the course of repetition of operations and the operation liquid must be supplied either periodically or at irregular intervals. Still further, foreign matters and dust or rust from the piping arrangement enters the piping arrangement and causes trouble of the support and the piston operation.

In the pressure-feeding apparatus 6 of the kind described above, large quantities of operation liquid 5 corresponding to the capacity of the piping arrangement are necessary, though the operation liquid 5 itself is extremely expensive. Accordingly, the cost of the apparatus becomes high as much. This demerit becomes critical particularly when the capacity of the extended piping arrangement is greater than that of the pressure chamber 3.

If leak or the like occurs unexpectedly in the piping arrangement, the quantity of the operation liquid 5 supplied to the pressure chamber 3 drops, though the accident itself can be detected by a predetermined pressure gauge or a outflow detector. This results in the problem that the liquid 4 to be pressure-fed cannot be sent as designed to the processor of the next stage and the processor cannot be operated with the expected efficiency.

D Summary of the Invention

In order to eliminate the problems of the operation liquid of the pressure chamber in the piping arrangement that occur in the prior art apparatuses such as the prior apparatuses of the Applicant of the present device, the present device is directed to provide an excellent pressure-feeding apparatus which completely eliminates the piping arrangement system of a pressure liquid necessary for pressure-feeding, employs a directed coupling type hydraulic cylinder for operating the pressure liquid in order to make the apparatus compact as a whole, reduces the initial cost of the apparatus as well as its running cost such as maintenance, inspection and repairing, and reduces loss and improves the efficiency.

E Brief Description of the Drawing

Fig. 1 is a schematic sectional view of one embodiment of the present device as a whole; and

Fig. 2 is a schematic sectional view of a pressurefeeding apparatus of prior art technique.

F Detailed Description of the Preferred Embodiment

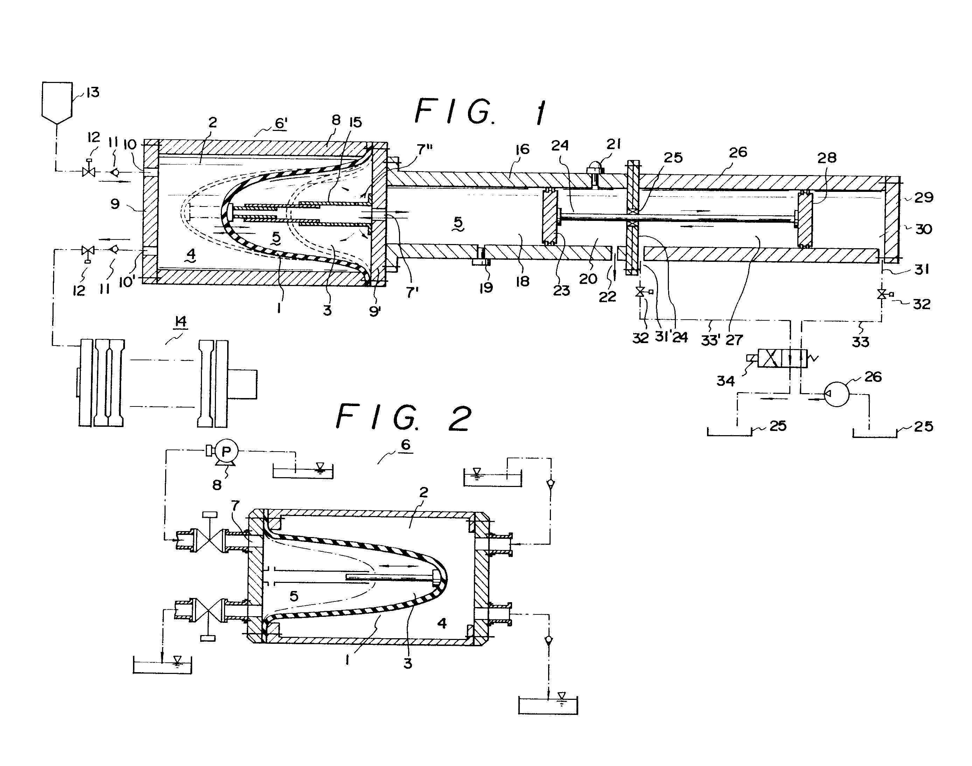

Next, one embodiment of the present device will be described with reference to Fig. 1. Incidentally, like reference numerals are used to identify like constituents as in Fig. 2.

In the pressure-feeding apparatus of the present device shown in Fig. 1, a main body 6' is disposed at the front end of the apparatus and a pair of feed/ discharge ports 10, 10' are formed on the front wall 9 of the housing 8 of the apparatus. One (10) of the feed/discharge ports is connected to a slurry tank 13 of a pressure-feeding tank through a check valve 11 and a switch valve 12 in order to store the slurry 4 in a pressure-feeding chamber 2 as the front chamber defined by a flexible membrane member 1 which is made of rubber and expands ahead and projectingly. The slurry is pressure-fed to a filter press 14 as a processor of a next stage from the other (10') of the feed/discharge ports through another check valve 11 and another switch valve 12.

The flexible membrane member 1 defines a pressure chamber 3 at the rear portion of the housing 8. A sleeve type support 15 extends from the rear wall 9' of the housing 8 and its rear end is fixed to the rear wall 9', while its tip is fixed to the flexible membrane member 1. Oil 5 as an operation liquid for a pressure liquid is supplied from a feed/discharge port 7' at the base of the support 15 to the inside and outside of the support 15. Another feed/discharge port 7' is bored at the center of the rear wall 9 with respect to the base of the support 15.

A hydraulic cylinder 16 whose diameter is smaller than the pressure-feeding apparatus main body 6' and whose length is longer is directly coupled to the back surface of the rear wall 9'. An output chamber 17 defined by the piston 20 of this cylinder is communicated with the pressure chamber 3 of the pressure-feeding apparatus main body 6 through the feed/discharge port 7' of the rear wall 9' of the housing 8, and the oil 5 as the operation liquid is sealed in the output chamber 17.

Accordingly, in the pressure-feeding apparatus of this device, the sum of the capacity of the output chamber 17 of the hydraulic cylinder 16 and the capacity of the pressure chamber 3 of the pressure-feeding apparatus main body 6' is equal to the capacity of the oil 5 as the operation liquid. Even when the oil flows into, and is sucked from, the pressure chamber 3 of the pressure-feeding apparatus main body 6' from the output chamber 17 of the hydraulic cylinder 16 through the feed/di-

scharge port 7', its capacity does not change but remains constant. In addition, its leak does not occur because the piping arrangement is not extended.

A nipple 19 for withdrawing the oil 5 for its replacement is disposed in the output chamber 17 of the hydraulic cylinder 16 and another nipple 21 for supplanting the oil is disposed in the air chamber 22 at the rear together with an air suction port 22.

The rod 24 of the piston 23 disposed inside the hydraulic cylinder 16 penetrates through the rear wall 24 of the air chamber 20 through a mechanical seal 25, and its rear end is connected to a piston 28 through a front chamber 27 inside another hydraulic cylinder 26 which is directly coupled to the rear wall 24.

Ports 31, 31' are disposed in the rear chamber 27 which is defined between the piston 28 and the rear wall 29. One (31) of these ports is connected to an oil tank 25 through a passage 33, a spool valve 34 and an oil pressure pump 26, while the other (31') is connected to the oil tank 25 through a passage 33', the spool valve 34 and the coil pressure pump 26 and is connected to the oil tank 25 through a feedback circuit.

(Embodiment and Action)

In the construction described above, when the flexible membrane member 1 of the pressure-feeding apparatus main body 6' is under the contracted state, the support 15 is under the shortest state and hence the pressure-feeding chamber 2 is filled with the slurry 4 as the liquid to be pressure-fed from the slurry tank 13. Under this state, when the hydraulic pump 26 is operated while the spool valve 34 is set to the state shown in the drawing, the oil is supplied into the rear chamber 30 of another hydraulic cylinder 26 from the oil tank 25 through the port 31 and pushes and moves forth the piston 28. The oil in the front chamber 27 is fed back to the oil tank 25 through the port 31', the passage 33' and the spool valve 34.

The rod 24 advancing integrally with the piston 28 moves forth integrally the piston 23 of the hydraulic cylinder 16, so that the oil 5 as the pressure oil that is fully charged into the output chamber 18 is pressurized and pressure-fed into the support 15 from the feed/discharge port 7' of the rear wall 9' of the housing 8 of the pressure-feeding apparatus main body 6' and then into the pressure chamber 3 inside the flexible membrane member 1 through the feed/discharge port 7". Accordingly, a large output is generated due to the increase of the surface area of the flexible membrane member 1, applies greater push force to the slurry 4 inside the pressure-feeding chamber and pressure-feeds the slurry 4 into the filter press 14 from one (10') of the feed/discharge ports 10'.

The slurry 4 is squeezed in a predetermined manner and is subjected to solid-liquid separation.

After the flexible membrane member 1 reaches the stroke end, the spool valve 34 is switched by a controller, not shown, so that the supply of the oil to the ports 31, 31' for the front and rear chambers 27, 30 of the hydraulic cylinder 26 is reversed. Accordingly, the piston 28 now shifts to the retreating process and moves back integrally the piston 23 of the hydraulic cylinder 16 through the rod 24.

In this advancing the retreating process, the air of the air chamber 20 of the hydraulic cylinder 16 is supplied and discharged through the port 22.

When the piston 23 of the hydraulic cylinder 16 moves backward, the oil 5 of the operation liquid inside its output chamber 18 is full so that a kind of a negative pressure state is attained and the oil 5 inside the pressure chamber 3 backflows into the output chamber 18 of the hydraulic cylinder 16 from the pressure chamber 3 through the feed/discharge port 7' of the rear wall 9' of the housing 8 of the pressure-feeding apparatus main body 6' and through the feed/discharge port 7" of the support 7". As a result, the output of the pressure chamber 3 drops and the flexible membrane member 1 is contracted. Since the support 15 is contracted, too, in this process, the posture of the flexible membrane member 1 does not collapse inside the housing 8 but contracts as a whole, so that the negative pressure occurs inside the pressure-feeding chamber 2 at the front and the slurry 4 is sufficiently sucked from the slurry tank 13 through the feed/discharge port 10, the switch valve 12 and the check valve 11 and the flexible membrane member reaches the stroke end.

Here, the spool valve 34 is again switched, and the pressing process is repeated. Accordingly, the slurry 4 inside the pressure-feeding chamber 2 of the pressure-feeding apparatus main body 6' is again pressure-fed into the filter press 14.

Since the process described above is repeated, a sufficient quantity of slurry 4 is supplied into the filter press 14.

During repetition of the process described above, the pressure chamber 3 of the pressure-feeding apparatus main body 6' and the output pressure-feeding chamber 18 of the hydraulic cylinder 16 are communicated with each other through the feed/discharge port 7' of the rear wall 9 defining these chambers. Therefore, their capacity remainsconstant as described above. Moreover, since the piping arrangement is not extended, a kind of hermetic state is maintained and leak of the oil 5 does not occur. Since dust or rust do not mix from the piping arrangement, no trouble occurs during the operation and the apparatus can be driven always with stable performance.

When the operation oil 5 is to be replaced either periodically or at irregular intervals, the nipples 19, 21 are removed at the stroke end to discharge the old oil 5 and to supply a fresh oil 21.

Needless to say, the present device is not particularly limited to the embodiment described above. For instance, the hydraulic cylinder of the post-stage need not be coupled directly to the hydraulic cylinder of the pre-stage but may be separated therefrom through a piping arrangement. In such a case, the operation liquid of the hydraulic cylinder of the post-stage is separate from that of the hydraulic cylinder of the pre-stage, and the merit of the pressure-feeding apparatus main body and the hydraulic cylinder coupled directly to the main body as the gist of the present device is not at all impeded.

The pressure-feeding apparatus in accordance with the present device can be applied not only to the slurry but also to various liquids such as the pressure-feed of a normal liquid in plants and laboratories, water for fire-fighting, and so forth.

In a pressure-feeding apparatus having fundamentally pressure-feeding means of a forwardly swelling type, the present device has the construction wherein the flexible membrane member as the pressure-feeding means defines the pressure-feeding chamber and the pressure chamber inside the housing, and the operation liquid for the pressure liquid such as the oil that generates the output pressure for the pressure chamber providing an extremely great pressure-feeding pressure to the pressure-feeding chamber is under the communication state through the output chamber of the hydraulic cylinder coupled directly to the rear wall of the housing and the feed/discharge port of the feed/discharge port of the pressure-feeding means. Accordingly, the operation liquid does not flow through other extended passages such as piping arrangement, but the pressure liquid from the output chamber of the hydraulic cylinder is directly introduced in order to apply the pressure. Since no pressure loss in the extended piping arrangement system occurs in the present device, the operation power can be utilized highly efficiently.

Since leak of the oil does not occur in the piping arrangement system, a predetermined quantity of the pressure liquid which is stable time-wise can always flow and the output is also stable time-wise.

In addition to the absence of leak of the oil, no dust or rust enter so that no trouble occurs in the operations of the piston of the hydraulic cylinder and the support of the pressure-feeding apparatus main body.

The operation liquid to be sealed such as the oil does not flow through other equipment through the piping arrangement system, the operation oil is not denatured and from this point, too, the operation gets stabilized.

Since no piping arrangement system exists, the quantity of the operation oil can be saved as much and its absolute quantity may be small. Since the operation oil is expensive, the cost of the apparatus can be reduced as much.

Since the apparatus can be made compact as a whole, space requirement can be reduced as much.

## Claims

1. In a pressure-feeding apparatus of the type wherein a flexible membrane member (1) disposed through a support (15) inside a housing (8) divides the interior of said housing (8) into a pressure chamber (3) and a pressure-feeding chamber (2) and feed/discharge ports for a liquid to be pressure-fed are disposed on the wall surface of said pressure-feeding chamber, the improvement wherein an output chamber (3) of another hydraulic cylinder (16) is directly coupled with said pressure chamber (3) through said feed/discharge ports, (7') and a piston (23) of said another hydraulic cylinder is interconnected to a piston (28) of still another hydraulic cylinder (26).

2. The pressure-feeding apparatus as defined in claim 1 wherein said another hydraulic cylinder - (16) and said still another hydraulic cylinder (26) are directly coupled through a partition wall (24).

3. The pressure-feeding apparatus as defined in claim 1 wherein said another cylinder and said still another hydraulic cylinder are coupled indirectly.

4. The pressure-feeding apparatus as defined in claim 1 wherein an operation liquid replacement (19,21) port is formed in said another hydraulic cylinder (16).

5. The pressure-feeding apparatus as defined in claim 1 wherein said support (15) is supported contractibly by at least three sleeves.

FIG. 1

FIG. 2